# FASCICULE DE BREVET EUROPEEN

(11) **EP 0 475 798 B1**
(45) Date de publication et mention de la délivrance du brevet: **07.06.1995**
(21) Numéro de dépôt: 91402179.5
(22) Date de dépôt: 02.08.1991
(51) Int. Cl.: H02G 3/12, H01R 25/16

(54) **Boîte de montage modulaire pour appareil électrique**
Modulares Befestigungsgehäuse für elektrisches Gerät
Modular mounting box for electrical apparatus

(30) Priorité: 30.08.1990 FR 9010809
(43) Date de publication de la demande: 18.03.1992
(73) Titulaire: PLANET-WATTOHM, 60300 Senlis (FR)
(72) Inventeur: Coutant, Régis, F-60117 Vauciennes (FR); Laigle, Jean, F-93700 Drancy (FR)
(74) Mandataire: CABINET BONNET-THIRION

(56) Documents cités:
- EP-A- 0 289 410
- GB-A- 2 065 988
- GB-A- 2 211 364

## Description

L'invention se rapporte à une boîte de montage modulaire pour appareil électrique, elle concerne plus particulièrement un agencement permettant d'insérer la boîte de plusieurs façons dans une goulotte de passage de conducteurs, en mettant à profit telle ou telle particularité de structure de la goulotte, différente suivant la forme et les dimensions de celle-ci.

Le document de brevet EP-A- 0289410 décrit une boîte de montage en plusieurs parties, susceptibles d'être assemblées entre elles pour constituer un ensemble plus particulièrement destiné à être monté dans une goulotte de passage de conducteurs. Le verrouillage est assuré par des crochets élastiques en matière plastique mais la conception de ces crochets ne permet le montage d'une telle boîte que dans un type spécifique de goulotte de passage de conducteurs.

Le document GB-A- 2 065 988 décrit une boîte de montage modulaire destinée à recevoir un appareil électrique et susceptible d'être installée dans une goulotte de passage de conducteur. L'ensemble comprend un corps de boîte et une embase de fixation pourvue de moyens d'accrochage. L'embase de fixation comporte deux parties raccordées entre elles par une sorte de charnière, les moyens d'accrochage étant liés à cette charnière. La mise en place du corps de boîte bloque la charnière à plat et permet la mise en oeuvre des moyens d'accrochage.

L'invention propose une autre conception permettant, selon les circonstances, de fixer la boîte de montage à plusieurs types de goulottes. L'idée de base de l'invention consiste à prévoir une boîte de montage en deux parties, respectivement un corps de boîte de forme et dimensions correspondant à l'appareil électrique et une embase venant s'accrocher au fond de la goulotte et sur laquelle le corps de boîte peut être facilement monté.

Plus précisément, l'invention concerne donc une boîte de montage modulaire destinée à recevoir un appareil électrique et susceptible d'être installée dans une goulotte de passage de conducteurs, comprenant un corps de boîte et une embase de fixation pourvue de moyens d'accrochage prévus pour coopérer avec des profilés longitudinaux de la paroi de fond d'une telle goulotte, ledit corps de boîte et ladite embase comportant des moyens d'assemblage coopérants, caractérisée en ce que lesdits moyens d'accrochage sont des moyens d'accrochage élastiques et en ce que ledit corps de boîte comporte, à sa partie inférieure, des pattes d'immobilisation desdits moyens d'accrochage.

Dans un tel système, les moyens d'accrochage sont de préférence constitués par des nervures rectilignes à profil en forme de crochet, chaque nervure étant rattachée à l'embase par un élément de structure élastique. Ainsi, l'accrochage s'effectue sur une longueur relativement importante, c'est-à-dire du même ordre de grandeur que la dimension longitudinale de l'embase, ce qui permet un verrouillage particulièrement efficace entre l'embase et les profilés longitudinaux de la paroi de fond de la goulotte, communément appelée rail.

Selon une autre caractéristique de l'invention, l'embase est réversible et comporte deux groupes de moyens d'accrochage respectivement prévus pour deux types de profilés longitudinaux (rails) différents, chaque groupe de moyens d'accrochage étant susceptible de coopérer avec les rails d'une goulotte particulière pour une position de montage correspondante de l'embase. Autrement dit, une même embase peut convenir pour au moins deux types de goulottes. Il est par ailleurs possible de prévoir plusieurs types d'embases avec des groupes de moyens d'accrochage agencés différemment pour l'adaptation à d'autres types de goulottes, le corps de boîte restant unique.

Par ailleurs, le corps de boîte peut comporter avantageusement des crochets élastiques susceptibles de coopérer avec un rebord supérieur d'une telle goulotte. De tels crochets sont définis près du bord d'ouverture du corps de boîte et celui-ci est muni d'une nervure externe avec laquelle lesdits crochets coopèrent pour enserrer ledit rebord supérieur de la goulotte. Les crochets sont délimités par des découpes pratiquées dans la paroi du corps de boîte et une partie saillante dirigée vers l'extérieur de chaque crochet est munie d'un trou situé dans le prolongement axial d'un autre trou défini dans un bossage interne venu de moulage avec le corps de boîte au voisinage de la nervure externe. Une simple vis engagée dans les deux trous alignés permet dans un premier temps l'immobilisation du crochet, empêchant notamment son retrait vers l'intérieur du corps de boîte sous l'effet d'un effort d'arrachement, et dans un second temps, l'immobilisation du corps de boîte dans la goulotte par serrage du rebord de celle-ci entre la partie saillante du crochet et la nervure externe du corps de boîte.

Lorsque ce type de montage est utilisé, l'utilisation de l'embase est facultative.

L'invention sera mieux comprise et d'autres avantages de celle-ci apparaîtront plus clairement à la lumière de la description qui va suivre d'un mode de réalisation actuellement préféré d'une boîte de montage conforme à son principe, donnée uniquement à titre d'exemple, et faite en référence aux dessins annexés dans lesquels:
- la figure 1 est une vue en perspective éclatée représentant une boîte de montage conforme à l'invention, mise en place dans une goulotte de passage de conducteur;
- la figure 2 est une vue de dessous du corps de boîte; et
- la figure 3 est une vue en coupe du corps de boîte de la figure 1, ce dernier étant représenté monté dans une autre goulotte de passage de conducteurs.

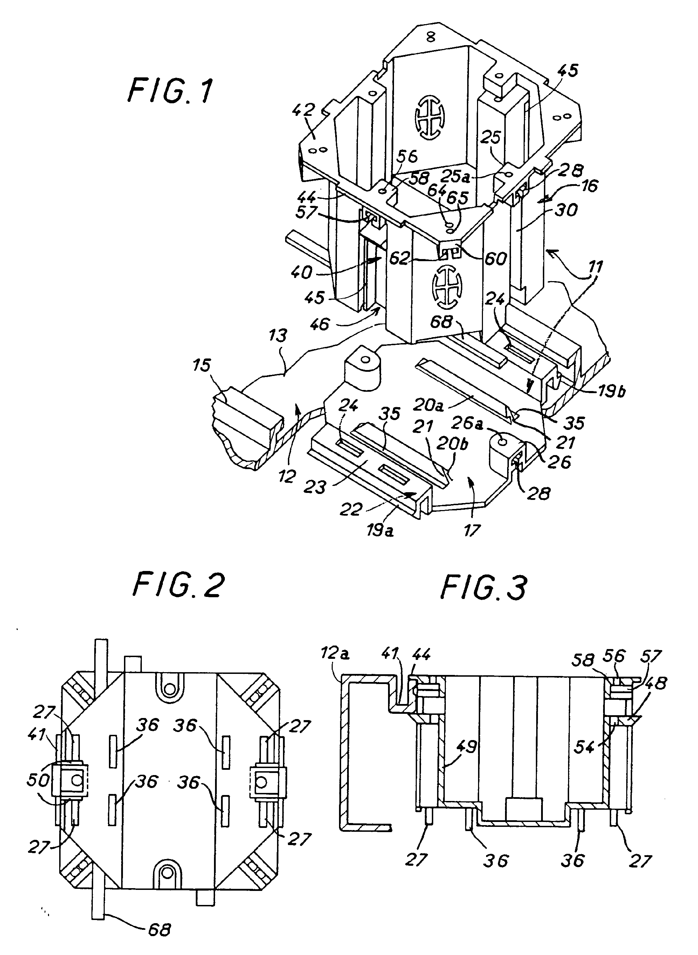

Sur les dessins, on a représenté une boîte de montage 11, pour un appareil électrique tel que une prise de courant ou un interrupteur, par exemple, conçue pour être montée dans une goulotte de passage de conducteurs 12, partiellement représentée à la figure 1 et dont la paroi de fond 13 est munie de profilés longitudinaux 15 plus communément appelés "rails". Dans l'exemple représenté, ces profilés longitudinaux sont au nombre de deux; ils sont agencés symétriquement face à face. Chacun d'eux a une section en forme de L renversé, s'étendant à partir de la paroi de fond. La boîte de montage 11 se compose d'un corps de boîte 16 et d'une embase de fixation 17, tous deux ici en matière plastique moulée. L'embase est indispensable lorsqu'on choisit de fixer ladite boîte de montage à la paroi de fond de la goulotte 12, en mettant à profit les profilés longitudinaux 15 de celle-ci. Cette embase est en effet pourvue de moyens d'accrochage élastiques prévus pour coopérer avec de tels profilés longitudinaux. Ceux-ci sont ici constitués par des nervures rectilignes 19a, 19b, 20a, 20b à profil en forme de crochet. Chaque nervure est rattachée au reste de ladite embase par un élément de structure élastique. Ainsi, les deux nervures 19a 19b sont définies le long des côtés longitudinaux de l'embase (par rapport à son sens de positionnement dans la goulotte) et chacune d'elles est formée le long d'un bord libre d'une partie rectiligne à profils en U 22. Comme le montre la figure 1, l'agencement est tel que ce U se trouve renversé en position d'utilisation, c'est-à-dire qu'il s'ouvre en direction de la paroi de fond de la goulotte lorsque l'embase y est installée. Dans ces conditions, chaque partie à profil en U présente une bande supérieure plate 23. Des lumières rectilignes 24 sont pratiquées dans ces bandes plates 23.

Il est à noter que les termes "inférieur" ou "supérieur", "horizontal" ou "vertical", etc..., qui pourront être employés tout au long de la description, ne sauraient faire référence à une quelconque position d'utilisation impérative de la boîte de montage. Ils indiquent simplement la position de tel ou tel élément par rapport à tel autre en supposant la paroi de fond de la goulotte située dans un plan de référence horizontal.

Les lumières rectilignes 24 sont disposées à des emplacements correspondant à des pattes d'immobilisation 27 faisant saillie de la paroi de fond du corps de boîte 16. Ainsi, lorsque le corps de boîte est placé sur son embase, les pattes 27 s'engagent dans les lumières 24 et empêchent tout retrait pivotant des nervures d'accrochage 19a, 19b. Ce sont ces nervures 19a, 19b qui sont plus particulièrement conformées pour venir s'encastrer et s'accrocher sous les profilés longitudinaux 15. Ainsi, la mise en place de l'embase au fond de la goulotte se fait simplement par emboîtement à force et effet de "clipsage" en mettant à profit l'élasticité conférée par les parties à profil en U 22. Dans un second temps, la mise en place du corps de boîte sur l'embase vient bloquer les nervures 19a, 19b, empêchant tout démontage par arrachement. Bien entendu, le corps de boîte 16 et l'embase comportent des moyens d'assemblage comprenant ici des bossages massifs 25, 26 respectivement venus de moulage avec le corps de boîte et l'embase et percés de trous 25a, 26a, respectivement, destinés à venir en alignement au montage pour un assemblage par vis. Les vis ne sont pas représentées. Ces trous peuvent être taraudés ou taraudables par les vis elles-mêmes. Chaque bossage 25, 26 comporte en outre une cavité ouverte 28 permettant d'insérer un écrou. La paroi latérale du corps de boîte est conformée avec deux renfoncements verticaux 30. Chacun s'étend à partir d'un bossage 25 et est ouvert sur toute la hauteur du corps de boîte. Ce renfoncement est élargi et ouvert à sa partie inférieure pour accueillir le bossage 26 correspondant. Une vis d'assemblage vient prendre place dans chaque renfoncement 30.

De plus, comme indiqué ci-dessus, l'embase comporte deux groupes de moyens d'accrochage: les nervures 19a, 19b d'une part et les nervures 20a, 20b d'autre part. L'embase est réversible, c'est-à-dire qu'elle peut prendre place dans la goulotte de deux façons différentes et les nervures 19 et 20 sont orientées en sens contraire pour coopérer avec des profilés longitudinaux correspondants dans l'une ou l'autre des positions de montage de l'embase, respectivement.

Sur la figure 1, les profilés longitudinaux susceptibles de coopérer avec les nervures 20a, 20b ne sont pas visibles car ces nervures sont prévues pour coopérer avec des profils longitudinaux d'un autre type de goulotte de passage de conducteurs. Ces deux nervures supplémentaires 20a, 20b sont moins écartées que les nervures 19a, 19b et font saillie de la surface de l'embase. Elles y sont rattachées par de fines bandes longitudinales élastiques 21. Des lumières rectilignes 35 sont ménagées le long de ces nervures et des pattes d'immobilisation 36, correspondantes, sont prévues sur le corps de boîte 16. Elles font saillie du fond de celui-ci pour s'engager, à l'assemblage, dans lesdites lumières 35 et empêcher tout fléchissement et retrait des nervures 20 en prise avec leurs profilés longitudinaux.

Selon une autre particularité remarquable de l'invention, le corps de boîte comporte deux crochets élastiques opposés 40 susceptibles de coopérer avec la face interne d'un rebord supérieur 41 d'une goulotte de passage de conducteurs 12a (figure 3). Ce rebord est plus spécifiquement conformé pour accueillir le couvercle de la goulotte. Les crochets s'étendent jusqu'au voisinage du bord d'ouverture 42 du corps de boîte. Celui-ci est muni d'une nervure externe 44 saillante, avec laquelle les crochets 40 coopèrent pour enserrer ledit rebord supérieur. Chaque crochet est délimité par des fentes 45 pratiquées dans la paroi latérale du corps de boîte sur une grande partie de sa hauteur, entre une partie saillante 48 du crochet et la paroi de fond du corps de boîte. Par ailleurs, ladite partie saillante 48, qui est mobile par rapport à la paroi du corps de boîte et non rattachée à celui-ci, se trouve définie à la partie supérieure d'un renfoncement 46, à profil en U, de la paroi latérale. Les faces latérales de ce renfoncement, séparées du reste du corps de boîte par les fentes 45, font partie du crochet. De plus, deux autres petites fentes parallèles 50 (voir figure 2) séparent les deux parois parallèles du renfoncement de la base du corps de boîte. Le crochet n'est donc en définitive rattaché au corps de boîte que par le bord inférieur de la paroi verticale la plus interne 49 dudit renfoncement 46. Cet agencement donne au crochet une certaine élasticité permettant la mise en place du corps de boîte dans la goulotte par simple effet de "clipsage". Avantageusement, chaque partie saillante 48 comporte une extrémité en biseau, facilitant la mise en place. De plus, elle est munie d'un trou 54 situé dans le prolongement d'un autre trou 56 défini dans un bossage 58 venu de moulage avec la paroi du corps de boîte au voisinage de la nervure 44. Ainsi, le crochet peut être immobilisé après sa mise en place dans la goulotte par une vis (non représentée) que l'on engage dans les deux trous alignés 54, 56. Pour ce faire, le trou 56 peut être taraudé ou taraudable par la vis elle-même mais il est aussi possible d'insérer un écrou dans un évidement 57 défini dans le bossage, sous le trou 56. Lorsque ce mode de fixation du corps de boîte dans la goulotte est utilisé, l'embase 17 n'est plus nécessaire.

Le corps de boîte comporte d'autres particularités remarquables. En particulier, il présente, en coupe "horizontale", un contour globalement octogonal mais la nervure 44 déborde aux angles par rapport au corps de boîte de façon à présenter un périmètre approximativement carré ou rectangulaire. Les trous de fixation pour l'appareil électrique sont ménagés sur les parties les plus saillantes de la nervure 44, aux angles du corps de boîte. Elles sont renforcées par des bossages inférieurs 60 venus de moulage et dans lesquels sont pratiquées des cavités 62 s'étendant en diagonale et susceptibles d'accueillir des écrous. Plusieurs trous de fixation 64, 65 débouchent dans chaque cavité 62 de façon à définir plusieurs entraxes de fixation d'appareil électrique. Les trous 64 et 65 peuvent par ailleurs être taraudés ou taraudables par une vis.

En outre, le fond du corps de boîte est muni de pattes de positionnement 68 de longueurs prédéterminées, susceptibles de venir en butée avec des corps de boîte voisins pour un positionnement correct des corps de boîte les uns par rapport aux autres.

Suivant que les pattes viennent bout à bout ou que la patte de la première boîte vient en appui sur la paroi de la seconde (montage alterné) deux entraxes sont possibles.

## Revendications

1. Boîte de montage modulaire destinée à recevoir un appareil électrique et susceptible d'être installée dans une goulotte de passage de conducteurs, comprenant un corps de boîte (16) et une embase de fixation (17) pourvue de moyens d'accrochage prévus pour coopérer avec des profilés longitudinaux de la paroi de fond d'une telle goulotte, ledit corps de boîte et ladite embase comportant des moyens d'assemblage coopérants (25, 26), caractérisée en ce que lesdits moyens d'accrochage sont des moyens d'accrochage élastiques (19, 20) et en ce que ledit corps de boîte comporte, à sa partie inférieure, des pattes d'immobilisation (27, 36) desdits moyens d'accrochage.

2. Boîte de montage selon la revendication 1, caractérisée en ce que ladite embase est réversible et comporte deux groupes de moyens d'accrochage respectivement prévus pour deux types de profilés longitudinaux précités différents, en ce que chaque groupe (19a, 19b-20a, 20b) de moyens d'accrochage est agencé pour coopérer avec des profilés longitudinaux correspondants, pour l'une des positions de montage de ladite embase, respectivement.

3. Boîte de montage selon la revendication 1 ou 2, caractérisée en ce que lesdits moyens d'accrochage sont constitués par des nervures rectilignes (19, 20) à profil en forme de crochet, chaque nervure étant rattachée à ladite embase par un élément de structure élastique.

4. Boîte de montage selon la revendication 3, caractérisée en ce que ladite embase comporte deux nervures (19a, 19b) définies sur ses côtés longitudinaux, respectivement, chaque nervure étant formée le long d'un bord libre d'une partie à profil en U (22).

5. Boîte de montage selon la revendication 4, caractérisée en ce que ladite partie à profil en U comporte des lumières rectilignes (24) pour le passage des pattes d'immobilisation (27) précitées.

6. Boîte de montage selon l'une des revendications 3 à 5, caractérisée en ce que ladite embase comporte deux nervures (20a, 20b) faisant saillie de sa surface et en ce que des lumières rectilignes (35) sont définies le long de ces nervures, pour le passage des pattes d'immobilisation (36) précitées.

7. Boîte de montage selon l'une des revendications précédentes, caractérisée en ce que ledit corps de boîte comporte des crochets élastiques (40) susceptibles de coopérer avec un rebord supérieur (41) d'une telle goulotte, en ce que ces crochets s'étendent au voisinage du bord d'ouverture dudit corps de boîte et que celui-ci est muni d'une nervure externe (44) avec laquelle lesdits crochets coopèrent pour enserrer ledit rebord supérieur, en ce que lesdits crochets sont délimités par des fentes (45, 50) pratiquées dans le corps de boîte et en ce qu'une partie saillante (48) de chaque crochet est munie d'un trou (54) situé dans le prolongement axial d'un autre trou (56) défini dans un bossage (58) venu de moulage au voisinage de ladite nervure externe, pour l'immobilisation dudit crochet au moyen d'une vis engagée dans les deux trous alignés précités.

8. Boîte de montage selon la revendication 7, caractérisée en ce que ledit crochet n'est rattaché que par un seul bord audit corps de boîte.

9. Boîte de montage selon l'une des revendications précédentes, caractérisée en ce que le fond dudit corps de boîte est muni de pattes de positionnement (68) de longueurs prédéterminées, susceptibles de venir en butée avec des corps de boîte voisins pour un positionnement correct de tels corps de boîte, les uns par rapport aux autres.

## Patentansprüche

1. Modulartiges Montagegehäuse, das zur Aufnahme eines elektrischen Geräts bestimmt ist und in einem Kabelkanal montiert werden kann, mit einem Gehäusekörper (16) und einer Befestigungs-Basisplatte (17), welche mit Hakenmitteln (19, 20) versehen ist, die vorgesehen sind, um mit Längsprofilen der Bodenwand eines solchen Kabelkanals zusammenzuwirken, wobei der Gehäusekörper und die Basisplatte zusammenwirkende Anschlußmittel (25, 26) aufweisen,
dadurch **gekennzeichnet,**
daß die Hakenmittel elastische Hakenmittel (19, 20) sind und daß der Gehäusekörper in seinem Unterteil Pratzen (27, 36) zum unbeweglichen Festlegen der Hakenmittel aufweist.

2. Montagegehäuse nach Anspruch 1,
dadurch **gekennzeichnet,**
daß die Basisplatte umkehrbar ist und zwei Gruppen von Hakenmitteln aufweist, die für zwei verschiedene Arten von Längsprofilen vorgesehen sind, daß jede Gruppe (19a, 19b, 20a, 20b) von Hakenmitteln vorgesehen ist, um mit entsprechenden Längsprofilen für jeweils eine Montagestellung der Basisplatte zusammenzuwirken.

3. Montagegehäuse nach Anspruch 1,
dadurch **gekennzeichnet,**
daß die Hakenmittel durch geradlinige Rippen (19, 20) mit hakenförmigem Profil gebildet sind, wobei jede Rippe durch ein Element mit elastischer Struktur an der Basisplatte befestigt ist.

4. Montagegehäuse nach Anspruch 3,
dadurch **gekennzeichnet,**
daß die Basisplatte zwei derartige Rippen (19a, 19b) aufweist, die auf ihren Längsseiten definiert sind, wobei jede Rippe entlang eines freien Randes eines Teils (22) mit U-Profil ausgebildet ist.

5. Montagegehäuse nach Anspruch 4,
dadurch **gekennzeichnet,**
daß der Teil mit U-Profil geradlinige Langlöcher (24) für den Durchtritt der Pratzen (27) zum unbeweglichen Festlegen aufweist.

6. Montagegehäuse nach einem der Ansprüche 4 bis 5,
dadurch **gekennzeichnet,**
daß die Basisplatte zwei Rippen (20a, 20b) aufweist, die von ihrer Oberfläche abstehen, und daß geradlinige Langlöcher (35) entlang dieser Rippen für den Durchtritt der Festlegungspratzen (36) definiert sind.

7. Montagegehäuse nach einem der vorhergehenden Ansprüche,
dadurch **gekennzeichnet,**
daß der Gehäusekörper elastische Haken (40) aufweist, die mit einem oberen Bord (41) eines solchen Kanals zusammenwirken können, daß sich diese Haken in der Nähe des Öffnungsrandes des Gehäusekörpers erstrecken und daß dieser mit einer Außenrippe (44) versehen ist, mit der die Haken zwecks Einspannens des oberen Bordes zusammenwirken, daß die Haken durch Schlitze (45, 50) begrenzt sind, die im Gehäusekörper eingearbeitet sind, und daß ein vorspringender Teil (48) jedes Hakens mit einem Loch (54) versehen ist, das sich in axialer Verlängerung eines weiteren Lochs (56) befindet, welches in einem in der Nähe der Außenrippe angeformten Vorsprung (58) definiert ist, um den Haken mittels einer in den fluchtenden Löchern eingesetzten Schraube unbeweglich festzulegen.

8. Montagegehäuse nach Anspruch 7,
dadurch **gekennzeichnet,**
daß der Haken nur über einen einzigen Rand am Gehäusekörper befestigt ist.

9. Montagegehäuse nach einem der vorhergehenden Ansprüche,
dadurch **gekennzeichnet,**
daß der Boden des Gehäusekörpers mit Positionierpratzen (68) vorbestimmter Länge versehen ist, die für eine genaue Positionierung solcher Gehäusekörper in bezug aufeinander in Anschlag an benachbarten Gehäusekörpern kommen können.

## Claims

1. A modular mounting box intended to receive an electrical device and capable of being installed in a channel for carrying conductors comprising a box body (16) and a fixing base (17) provided with latching means for co-operating with longitunal profiled portions of the bottom wall of such a channel, said box body and said base comprising co-operating assembly means (25, 26), characterised in that said latching means are resilient latching means (19, 20), that in its lower part said box body comprises lugs (27, 36) for immobilisation of said latching means.

2. A mounting box according to claim 1 characterised in that said base is reversible and comprises two groups of latching means which are respectively provided for two different types of said longitudinal profiled portions, that each group (19a, 19b-20a, 20b) of latching means is arranged to co-operate with corresponding longitudinal profiled portions for one of the mounting positions of said base respectively.

3. A mounting box according to claim 1 or claim 2 characterised in that said latching means are formed by straight ribs (19, 20) of a hook-shaped profile, each rib being attached to said base by a resilient structural element.

4. A mounting box according to claim 3 charaterised in that said base comprises two such ribs (19a, 19b) defined on its respective longitudinal sides, each rib being formed along a free edge of a part (22) of U-shaped profile.

5. A mounting box according to claim 4, characterised in that said part of U-shaped profile comprises straight openings (24) for receiving said immobilisation lugs (27).

6. A mounting box according to one of claims 3 to 5 characterised in that said base comprises two such ribs (20a, 20b)) which project from its surface and that straight openings (35) are defined along said ribs, for receiving said immobilisation lugs (36).

7. A mounting box according to one of the preceding claims characterised in that said box body comprises resilient hooks (40) capable of co-operating with an upper edge portion (41) of such a channel, that said hooks extend in the vicinity of the edge of the opening of said box body and that same is provided with an external rib (44) with which said hooks co-operate to grip said upper edge portion, that said hooks are defined by slots (45, 50) provided in the box body and that a projecting part (48) of each hook is provided with a hole (54) disposed in axial alignment with another hole (56) defined in a boss (58) which is moulded in the vicinity of said external rib, for immobilisation of said hook by means of a screw which is engaged into said two aligned holes.

8. A mounting box according to claim 7 characterised in that said hook is attached to said box body only by a single edge.

9. A mounting box according to one of the preceding claims characterised in that the bottom of said box body is provided with positioning lugs (68) of predetermined lengths which are capable of coming into a condition of abutment with adjacent box bodies for correct positioning of such box bodies relative to each other.
